# FASCICULE DE BREVET EUROPEEN

(11) **EP 4 018 009 B1**
(45) Date de publication et mention de la délivrance du brevet: **23.09.2026**
(21) Numéro de dépôt: 20742288.2
(22) Date de dépôt: 23.07.2020
(51) Int. Cl.: C23C 4/00, F01D 5/28, F01D 11/12

(54) **PROCÉDÉ DE FABRICATION D'UN ÉLÉMENT D'ÉTANCHÉITÉ ABRADABLE, ET ÉLÉMENT D'ÉTANCHÉITÉ ABRADABLE**
VERFAHREN ZUR HERSTELLUNG EINES ABREIBBAREN DICHTUNGSELEMENTES UND ABREIBBARES DICHTUNGSELEMENT
METHOD FOR MANUFACTURING AN ABRADABLE SEALING ELEMENT, AND ABRADABLE SEALING ELEMENT

(30) Priorité: 23.07.2019 FR 1908330
(43) Date de publication de la demande: 29.06.2022
(73) Titulaire: SAFRAN AIRCRAFT ENGINES, 75015 Paris (FR)
(72) Inventeur: ILLAND, Hubert Jean-Yves, 77550 MOISSY-CRAMAYEL (FR); SELEZNEFF, Serge Georges Vladimir, 77550 MOISSY-CRAMAYEL (FR); FRADET, Guillaume, 77550 MOISSY-CRAMAYEL (FR); DUDON, Laurent Paul, 77550 MOISSY-CRAMAYEL (FR)
(74) Mandataire: Regimbeau
(86) Numéro de dépôt international: PCT/EP2020/070776
(87) Numéro de publication internationale: WO 2021/013920

(56) Documents cités:
- US-A1- 2019 032 504

## Description

### DOMAINE DE L'INVENTION

L'invention se situe dans le domaine de l'aéronautique.

Elle concerne plus spécialement un procédé de fabrication en continu d'un élément d'étanchéité abradable pour une turbomachine. Cet élément d'étanchéité est préférentiellement destiné à être monté sur un carter d'une roue de rotor ou un pied d'un distributeur d'une turbine ou d'un compresseur de turbomachine.

Elle concerne également cet élément d'étanchéité abradable ainsi qu'une turbine ou qu'un compresseur le comprenant.

### ETAT DE LA TECHNIQUE

De manière classique, une turbomachine comprend d'amont en aval, successivement un compresseur basse pression, un compresseur haute pression, une chambre de combustion, une turbine haute pression et une turbine basse pression, qui sont traversés par un flux d'air.

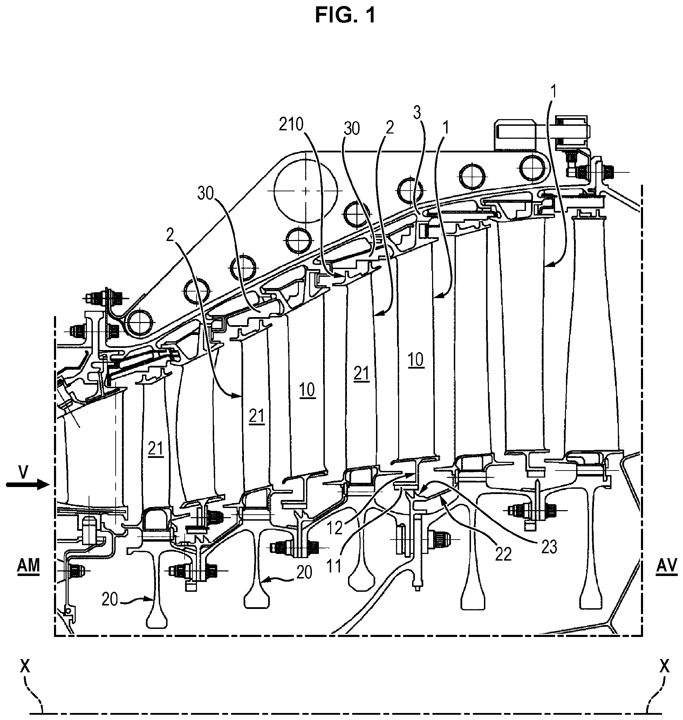

La figure 1 jointe représente un exemple de réalisation d'une turbine de turbomachine. Le flux de gaz s'écoule à l'intérieur de la turbine de l'amont AM, vers l'aval AV selon le sens d'écoulement représenté par la flèche V.

Cette turbine comprend plusieurs étages successifs, chaque étage comprenant un distributeur 1 et une roue de rotor 2. Ces derniers sont disposés à l'intérieur d'un carter 3, annulaire, de forme sensiblement tronconique, d'axe X-X'. La roue de rotor 2 tourne autour de l'axe X-X'. Le carter 3 forme une virole externe pour la turbine.

Chaque roue de rotor 2 comprend un disque 20 qui porte à sa périphérie une pluralité d'aubes radiales 21. Les différents disques 20 sont assemblés entre eux et fixés sur un arbre de rotation, (non représenté sur les figures) qui les entraîne simultanément en rotation. Chaque distributeur 1 comprend une pluralité d'aubes radiales 10 dont l'extrémité radialement externe est fixée sur le carter 3.

Un anneau, constitué de plusieurs éléments de matériau abradable 30 disposés bout à bout circonférentiellement, est fixé sur la face interne du carter 3, en regard de l'extrémité radialement externe des aubes de rotor 21. Pendant le fonctionnement de la turbine, le sommet des aubes 21 (éventuellement muni de léchettes 210) pénètre dans le matériau abradable de l'élément 30. Ceci permet d'avoir un jeu, essentiellement radial, entre le sommet des aubes mobiles 21 et le carter 3, le plus faible possible, voire nul. On assure ainsi la performance aérodynamique de la turbine et donc de la turbomachine.

Pour les mêmes raisons de performance aérodynamique, un pied de distributeur 12 annulaire supporte plusieurs éléments de matériau abradable 11 disposés bout à bout circonférentiellement. Il est agencé à l'extrémité radialement interne des aubes fixes 10, de façon à se trouver en regard d'une bride annulaire 22, elle-même fixée entre deux disques de rotor 21 voisins. Cette bride 22 est munie d'au moins une léchette annulaire 23 qui pénètre dans le matériau abradable 11, pendant le fonctionnement de la turbine.

La veine d'une turbomachine est le lieu d'un écoulement rapide d'air et de particules diverses. Il est donc souhaitable que le matériau abradable des éléments 30 et 11 soit à la fois abradable, (c'est-à-dire qu'il s'use préférentiellement par rapport aux aubes 21 ou aux léchettes 23) et résistant à l'érosion vis-à-vis des particules. Or ces deux propriétés sont antagonistes, ce qui pose des problèmes dans l'élaboration des matériaux abradables.

Le compresseur d'une turbomachine présente une structure analogue en ce qui concerne les éléments abradables.

On connait déjà d'après le document US 2019/032504 un composant haute performance comprenant un substrat support recouvert d'une piste abradable multicouches, ainsi que son procédé de fabrication.

Toutefois, ce document ne décrit pas le procédé de fabrication conforme à l'invention, ni un élément d'étanchéité abradable comprenant des sous-couches de matériau abradable présentant une résistance mécanique à l'usure décroissante depuis la sous-couche la plus proche du substrat support jusqu'à celle la plus éloignée de ce substrat support.

### EXPOSE DE L'INVENTION

Un but de l'invention est donc de proposer un élément d'étanchéité abradable, qui comprenne un substrat support, recouvert d'un revêtement qui soit à la fois abradable et résistant à l'érosion, cet élément abradable pouvant être fixé, de préférence, sur la face interne du carter 3, en regard de l'extrémité radialement externe des aubes de rotor 21 ou sur l'extrémité radialement interne des aubes radiales fixes 10 du distributeur, plus précisément sur le pied de distributeur 12, en regard des léchettes 23.

Un autre but de l'invention est de proposer un procédé de fabrication d'un tel élément d'étanchéité abradable.

A cet effet, l'invention concerne un procédé de fabrication en continu d'un élément d'étanchéité abradable pour une turbomachine, cet élément d'étanchéité comprenant un substrat support recouvert d'un revêtement comprenant au moins deux couches successives, chaque couche comprenant une sous-couche de matériau abradable et une sous-couche de matériau anti-érosion et les différentes couches étant disposées selon une direction d'empilement de couches, de façon qu'une sous-couche de matériau abradable soit alternée avec une sous-couche de matériau anti-érosion.

Conformément à l'invention, ce procédé comprend les étapes consistant à :
- a) disposer au moins un substrat support sur un carrousel rotatif autour duquel sont disposés au moins deux torches de projection thermique, l'une des deux torches permettant de déposer la sous-couche de matériau abradable et l'autre des deux torches permettant de déposer la sous-couche de matériau anti-érosion,
- b) faire tourner le carrousel de façon à amener ledit substrat support successivement en face de l'une puis de l'autre des deux torches de projection thermique et à réaliser le dépôt de la sous-couche de matériau anti-érosion et le dépôt de la sous-couche de matériau abradable et répéter cette opération de rotation du carrousel et de dépôt des sous-couches de façon à obtenir ledit élément d'étanchéité abradable.

Grâce à ces caractéristiques de l'invention, il est possible de fabriquer de manière industrielle et en continu un élément d'étanchéité abradable qui résiste bien à l'érosion.

Selon d'autres caractéristiques avantageuses et non limitatives de l'invention, prises seules ou en combinaison :
- lesdites torches de projection thermique sont des torches plasma ;
- le procédé consiste à disposer N substrats support sur le carrousel rotatif, espacés régulièrement d'un angle de 360°/N, sur la périphérie du carrousel ;
- le procédé consiste à déposer au moins trois couches empilées successives, sur ledit substrat support, de façon à former ledit revêtement et les différentes sous-couches de matériau abradable de ce revêtement présentent une résistance mécanique à l'usure décroissante depuis la sous-couche de matériau abradable la plus proche du substrat support jusqu'à celle la plus éloignée de ce substrat support selon la direction d'empilement des couches.

L'invention concerne également un élément d'étanchéité abradable pour une turbomachine.

Conformément à l'invention, cet élément est obtenu par le procédé précité, il comprend un substrat support recouvert d'un revêtement comprenant au moins deux couches successives, de préférence au moins trois couches successives, chaque couche comprend une sous-couche de matériau abradable et une sous-couche de matériau anti-érosion, les différentes couches sont disposées, selon une direction d'empilement des couches, de façon qu'une sous-couche de matériau abradable soit alternée avec une sous-couche de matériau anti-érosion et les différentes sous-couches de matériau abradable présentent une résistance mécanique à l'usure décroissante depuis la sous-couche de matériau abradable la plus proche du substrat support jusqu'à celle la plus éloignée de ce substrat support selon une direction d'empilement des couches.

Selon d'autres caractéristiques de l'invention prises seules ou en combinaison :
- les différentes couches empilées sont en contact les unes avec les autres ;
- les différentes sous-couches de matériau anti-érosion présentent une même épaisseur et/ou les différentes sous-couches de matériau abradables présentent une même épaisseur ;
- pour chaque couche, la sous-couche de matériau abradable est au moins dix fois plus épaisse que la sous-couche de matériau anti-érosion ;
- l'épaisseur de chaque sous-couche de matériau anti-érosion est comprise entre 1 µm et 50 µm ;
- chaque sous-couche anti-érosion comprend un matériau choisi parmi les matériaux à base de fer ou de nickel, tels que les alliages nickel/chrome/aluminium ou parmi les matériaux céramiques ;
- chaque sous-couche abradable comprend un matériau choisi parmi les matériaux du groupe des terres rares.

L'invention concerne également une turbine ou un compresseur de turbomachine comprenant au moins une roue de rotor et un distributeur, disposés à l'intérieur d'un carter, la roue de rotor comprenant une pluralité d'aubes radiales, ledit carter comprenant sur sa face intérieure au moins un élément d'étanchéité abradable, disposé en regard des extrémités radialement externes desdites aubes de rotor.

Selon l'invention, ledit au moins un élément d'étanchéité abradable est un élément tel que précité et ladite roue de rotor est disposée de sorte que ses aubes radiales viennent au contact des couches du revêtement dudit élément d'étanchéité abradable.

Enfin, l'invention concerne une turbine ou un compresseur de turbomachine comprenant au moins deux roues de rotor et un distributeur, chaque roue de rotor comprenant un disque de rotor muni à sa périphérie d'une pluralité d'aubes radiales, le distributeur comprenant une pluralité d'aubes radiales, au moins l'une desdites aubes de distributeur supportant au niveau de son extrémité radialement interne, au moins un élément d'étanchéité abradable.

Selon l'invention, ledit au moins un élément d'étanchéité abradable est un élément tel que précité, une bride munie d'au moins une léchette d'étanchéité annulaire est fixée entre lesdits deux disques de rotor et ladite léchette d'étanchéité est disposée de façon à venir au contact des couches du revêtement dudit élément d'étanchéité abradable.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une vue en coupe axiale d'une partie d'une turbine d'une turbomachine.
La figure 2 est un schéma représentant un élément d'étanchéité abradable conforme à l'invention.
La figure 3 est un graphique représentant la résistance mécanique à l'usure R d'un exemple de revêtement de l'élément abradable, en fonction de la hauteur H de ce revêtement.
La figure 4 est un graphique représentant la résistance mécanique à l'usure R d'un autre exemple de revêtement de l'élément abradable, en fonction de la hauteur H de ce revêtement.
La figure 5A est un schéma représentant une première étape du procédé de fabrication en continu conforme à un premier mode de réalisation de l'invention.
La figure 5B est un schéma représentant une deuxième étape du procédé de fabrication en continu conforme à un premier mode de réalisation de l'invention.
La figure 5C est un schéma représentant une troisième étape du procédé de fabrication en continu conforme à un premier mode de réalisation de l'invention.
La figure 6A est un schéma représentant une première étape du procédé de fabrication en continu conforme à un deuxième mode de réalisation de l'invention.
La figure 6B est un schéma représentant une deuxième étape du procédé de fabrication en continu conforme à un deuxième mode de réalisation de l'invention.
La figure 6C est un schéma représentant une troisième étape du procédé de fabrication en continu conforme à un deuxième mode de réalisation de l'invention.
La figure 7 est un schéma représentant un troisième mode de réalisation du procédé de fabrication en continu conforme à l'invention.
La figure 8 est un schéma représentant l'installation permettant la mise en œuvre du procédé conforme à l'invention.

Sur l'ensemble des figures, les éléments similaires portent des références identiques.

### DESCRIPTION DETAILLEE DE L'INVENTION

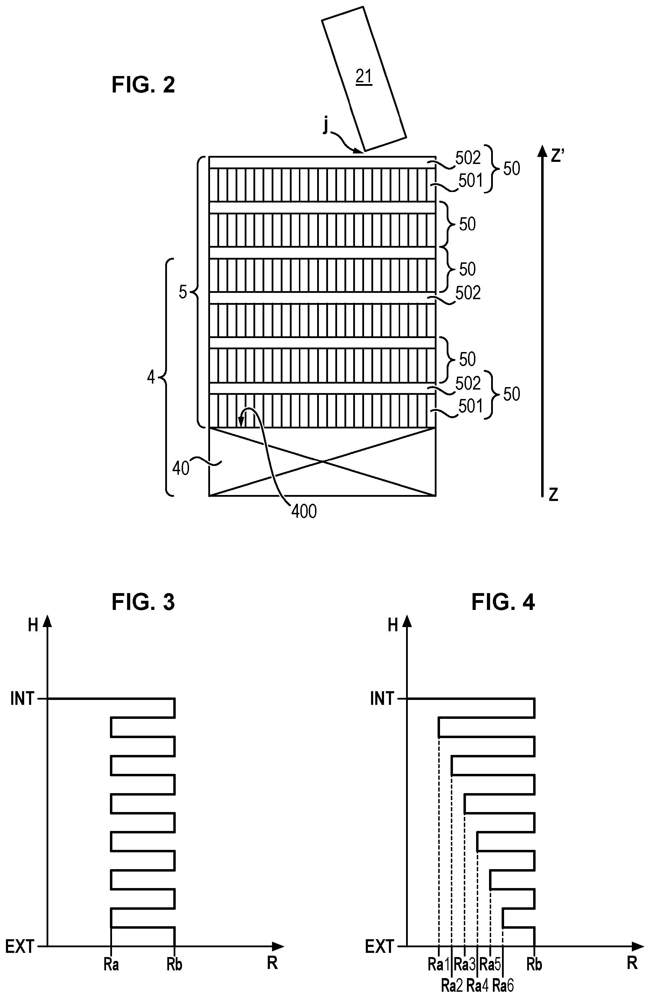

L'invention concerne un élément abradable 4, tel que celui représenté de façon schématique sur la figure 2. Cet élément abradable 4 est préférentiellement destiné à remplacer au moins un des éléments abradables 30 et/ou des éléments abradables 11 de la turbine de la figure 1 ou d'un compresseur non représenté sur les figures.

L'élément abradable 4 comprend un substrat support 40 recouvert d'un revêtement 5.

Le substrat support 40 présente préférentiellement la forme d'un secteur d'anneau incurvé en arc de cercle. Ces différents secteurs d'anneaux sont destinés à être placés bout à bout circonférentiellement, de façon à former un anneau complet, qui est fixé sur la face interne du carter 3. Le substrat support 40 pourrait également être un anneau complet.

La face concave de ce substrat support est la face radialement interne de celui-ci et c'est elle qui est recouverte du revêtement 5. Le substrat support 40 peut être réalisé en métal, en céramique ou en matériau composite à matrice céramique (CMC).

Le revêtement 5 comprend au moins deux couches successives 50, de préférence superposées. Chaque couche 50 comprend une sous-couche d'un matériau abradable 501 et une sous-couche d'un matériau anti-érosion 502, plus résistante mécaniquement que la sous-couche abradable 501, c'est-à-dire qui se rompt moins facilement. Une variante de réalisation préférée de l'invention, décrite ultérieurement comprend au moins trois couches successives 50.

De préférence, l'empilement des couches 50 est fait de sorte qu'une sous-couche anti-érosion 502 soit la dernière de l'empilement, c'est-à-dire qu'elle soit située à l'extrémité opposée au substrat 40 selon la direction d'empilement des couches.

La direction d'empilement des couches part du substrat 40 et s'en éloigne. Elle est matérialisée par la flèche Z-Z' en figure 2.

La première sous-couche au contact du substrat 40 peut indifféremment être une sous-couche 501 ou 502.

La solution technique conforme à l'invention consiste à alterner des sous-couches abradables 501 avec des sous-couches anti-érosion 502 plus résistantes mécaniquement que les sous-couches abradables 501. Lors du contact d'une pièce mobile, (par exemple sur la figure 2 une aube de rotor 21), la pénétration de l'aube va faire partir la première sous-couche anti-érosion 502 en cisaillant la sous-couche abradable 501 du dessous, et ce avec un minimum d'effort et d'abrasion pour l'aube mobile 21.

L'érosion par les particules circulant dans le flux d'air élimine ensuite les résidus de la sous-couche abradable 501 et s'arrête au niveau de la sous-couche anti-érosion 502 suivante. Lors du fonctionnement de la turbine, les aubes 21, ou les léchettes 23, se dilatent davantage radialement en direction de l'élément abradable, de sorte qu'une couche 50 suivante peut à son tour être dégradée, comme cela vient d'être décrit et cette opération peut se répéter.

Plus les différentes sous-couches 501, 502 sont fines et plus le jeu j résiduel entre le sommet de l'aube 21 et la surface en regard du revêtement 5 est faible et donc plus l'étanchéité et le rendement de la turbine sont garantis.

De façon avantageuse, les différentes sous-couches 501 de matériau abradable sont de même épaisseur entre elles.

De préférence, les différentes sous-couches de matériau anti-érosion 502 sont de même épaisseur entre elles.

De préférence également, la sous-couche de matériau abradable 501 est plus épaisse que la sous-couche de matériau anti-érosion 502, de préférence encore au moins dix fois plus épaisse.

De préférence, la sous-couche de matériau anti-érosion 502 est d'une épaisseur inférieure à 0,1 mm, de préférence encore comprise entre 1 µm et 50 µm. Ainsi, cette couche anti-érosion n'altère pas le caractère abradable de la sous-couche 501.

De façon avantageuse, le revêtement 5 comprend entre dix et mille couches 50.

Le matériau constitutif de la sous-couche anti-érosion 502 est avantageusement choisi parmi les matériaux à base de fer ou de nickel, tels que les alliages nickel/chrome/aluminium (NiCrAl). Le matériau de la sous-couche anti-érosion 502 peut aussi être de nature céramique.

Le matériau constitutif de la sous-couche de matériau abradable 501 est avantageusement choisi parmi les matériaux du groupe des terres rares.

Selon une première variante de réalisation du revêtement 5, les différentes sous-couches de matériau abradable 501 ont entre elles la même résistance mécanique, et par ailleurs, les différentes sous-couches de matériau anti-érosion 502 ont entre elles la même résistance mécanique. De plus, les sous-couches anti-érosion 502 sont plus résistantes mécaniquement que les sous-couches abradables 501.

Ce cas de figure est illustré sur la figure 3, qui est un schéma représentant l'évolution de la résistance mécanique à l'usure R des différentes sous-couches en fonction de la hauteur H du revêtement 5, depuis la zone radialement externe EXT du revêtement (la plus proche du substrat support 40), jusqu'à la zone radialement interne (INT) de ce substrat. Sur ce schéma, on peut voir que les sous-couches anti-érosion 502 ont toutes une résistance mécanique à l'usure Rb et que les sous-couches de matériau abradable 501 ont toutes une résistance mécanique à l'usure Ra, avec Rb supérieur à Ra.

Selon une variante de réalisation préférée de l'invention, le revêtement 5 comprend au moins deux couches 50, de préférence au moins trois couches 50, comprenant chacune les deux sous-couches 501 et 502 avec une variation de résistance mécanique à l'usure des sous-couches 502 sur la hauteur H du revêtement (voir figure 4). Ainsi, alors que la résistance mécanique à l'usure du matériau anti-érosion 502 est constante (valeur Rb), la résistance mécanique à l'usure de la sous-couche 501 de matériau abradable varie et elle est croissante depuis l'extrémité radialement interne (INT) du revêtement 5 jusqu'à l'extrémité radialement externe de celui-ci, (côté EXT). Ainsi, à chaque nouvelle sous-couche 501 de matériau abradable, la résistance mécanique à l'usure Ra augmente, ici avec six sous-couches on voit que les valeurs Ra1, Ra2, Ra3, Ra4, Ra5, Ra6 sont croissantes, toutes ces valeurs étant en outre inférieure à Rb.

Ainsi, avoir une résistance mécanique à l'usure plus faible des sous-couches abradables 501 au contact de l'aube mobile 21 peut éviter une rupture directe d'une sous-couche abradable 501 (plus proche du substrat support 40).

Une possibilité pour faire varier la résistance mécanique à l'usure d'une sous-couche consiste à agir sur sa densité. Plus une sous-couche sera dense et plus elle sera résistante mécaniquement.

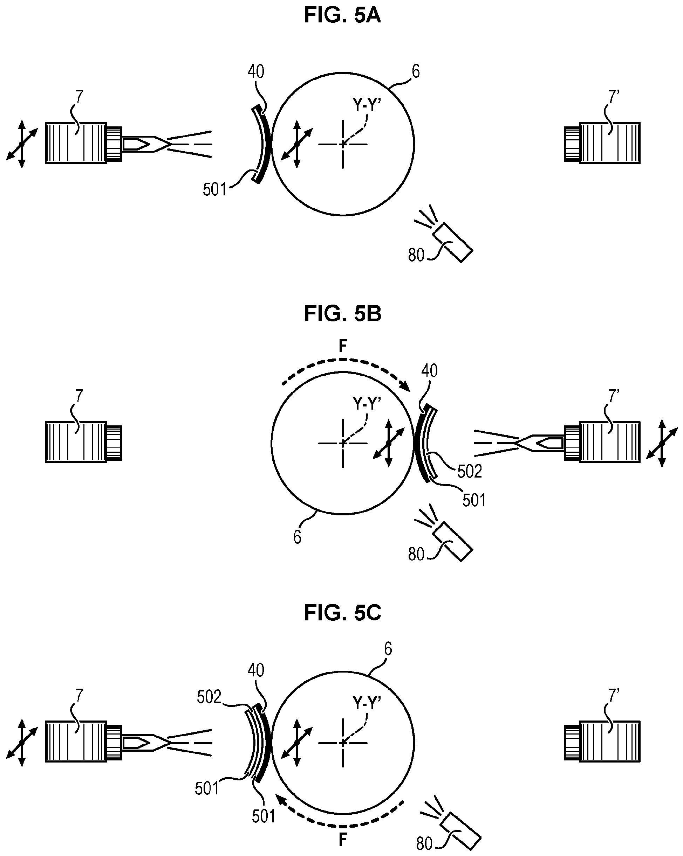

Un exemple d'un procédé de fabrication de l'élément abradable 4 précité va maintenant être décrit en liaison avec les figures 5A à 8.

Le procédé conforme à l'invention est un procédé industriel, qui permet de fabriquer le revêtement 5 en continu, à cadence élevée, en revêtant au moins un substrat support 40 et préférentiellement plusieurs dizaines de substrats supports simultanément.

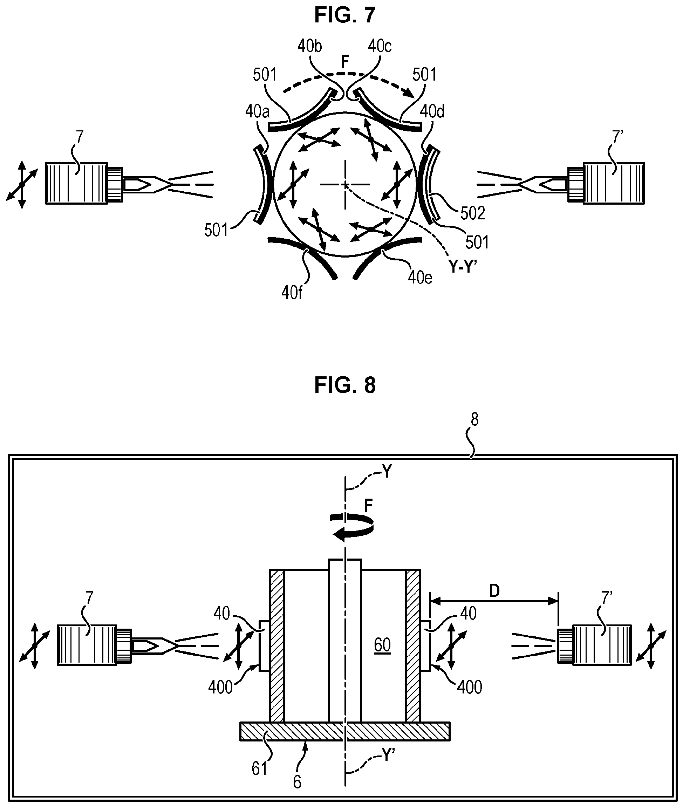

Le procédé conforme à l'invention est mis en œuvre dans une installation telle que par exemple celle représentée sur la figure 8. Celle-ci comprend un carrousel 6 de préférence motorisé, au moins deux torches de projection thermique 7, 7', le tout étant placé préférentiellement dans une enceinte de projection 8.

Le carrousel 6 comprend un socle 60, fixé sur un plateau rotatif 61, entraîné en rotation autour d'un axe vertical Y-Y'. Les substrats supports 40 sont disposés sur la face externe du socle 60, de façon que leur face interne incurvée 400 se trouve en regard des torches de projection 7, 7'.

Les torches 7, 7' peuvent par exemple être choisies parmi les torches de projection plasma à air, connues sous l'acronyme anglais « APS » (qui signifie « Air Plasma Spraying ») ou les torches de pulvérisation utilisant un mélange de combustible et d'oxygène à haute vitesse, connues sous l'acronyme anglais de « HVOF » (qui signifie « High Velocity Oxygen Fuel »). Ces différents types de torches permettent d'avoir des formulations de poudre différentes et ainsi de déposer au choix la sous-couche de matériau abradable 501 ou la sous-couche de matériau anti-érosion 502.

De façon avantageuse, au moins une des torches 7, 7' peut posséder un ou deux degrés de liberté et son déplacement peut éventuellement être programmable. Cette torche peut par exemple être montée sur un bras articulé robotisé, de façon à pivoter par exemple vers la gauche ou vers la droite par rapport à l'axe de rotation Y-Y', ou vers le haut ou vers le bas par rapport à la position verticale du carrousel 6 représenté sur la figure 8.

De façon avantageuse, la distance D entre le substrat support 40 à recouvrir et la torche de projection 7 ou 7' peut être ajustable.

Le carrousel 6 est entraîné en rotation (flèche F), soit de façon continue, soit de façon indexée en 360/N degrés d'angle, N étant le nombre de substrats supports 40 fixés sur le carrousel, de façon à amener séquentiellement chaque substrat support 40 devant une torche 7 ou 7'. Par exemple, lorsque six substrats supports 40 sont répartis sur le carrousel 6, ce déplacement séquencé s'effectuera soixante degrés par soixante degrés.

L'une des torches, par exemple la torche 7, permet de déposer la sous-couche de matériau abradable 501 et l'autre, par exemple la torche 7', la couche de matériau anti-érosion 502.

Dans l'exemple représenté sur les figures, les torches 7 et 7' sont disposées à 180° l'une de l'autre. Toutefois cette disposition angulaire pourrait être différente. En outre, comme représenté par exemple sur les figures 5A à 5C, il est possible de disposer autour du carrousel 6, un dispositif 80 projetant un jet d'air de refroidissement, de préférence après le passage du substrat support 40 devant les deux torches 7 et 7'.

De façon avantageuse, le substrat support 40 est préparé avant d'être fixé sur le carrousel 6. Il est par exemple possible de lui faire subir un décapage mécanique ou chimique, suivi d'une étape de nettoyage permettant d'éliminer les résidus du décapage, ce nettoyage pouvant être effectué par exemple dans un bain de solvant. Il est également possible de déposer ensuite sur ce substrat 40, une sous-couche d'accroche du revêtement 5 qui sera déposé ultérieurement.

Le substrat support 40 peut ensuite être fixé sur le carrousel 6.

De façon avantageuse, et comme représenté sur les figures, le substrat support 40 peut être fixé sur le socle 60 au moyen d'un dispositif qui autorise également un ou deux degrés de liberté, par exemple un mouvement vers le haut ou vers le bas ou vers la droite ou vers la gauche. Ceci permet par exemple de réaliser un balayage du faisceau projeté par la torche 7 ou 7' sur la surface du substrat support 40 à recouvrir.

Dans l'exemple de réalisation représenté sur les figures 5A à 5C, un seul substrat support 40 est fixé sur le carrousel 6.

Le carrousel 6 est positionné de façon que le substrat 40 soit devant l'une des deux torches, par exemple devant la torche 7 (figure 5A). Le dépôt de la première sous-couche est effectué, par exemple la sous-couche de matériau abradable 501, puis le carrousel 6 est entraîné en rotation de façon à amener le substrat 40 devant l'autre torche 7' et à réaliser le dépôt de l'autre sous-couche, ici 502 (figure 5B). La rotation du carrousel 6 est poursuivie et après passage devant l'éventuel dispositif de pulvérisation du jet d'air 80, le substrat 40 se retrouve devant la première torche 7 (figure 5C) pour recevoir de nouveau une sous-couche de matériau abradable 501. Ce cycle est répété autant de fois qu'il est nécessaire pour obtenir le nombre de sous-couches 501, 502 souhaitées, sur le substrat 40.

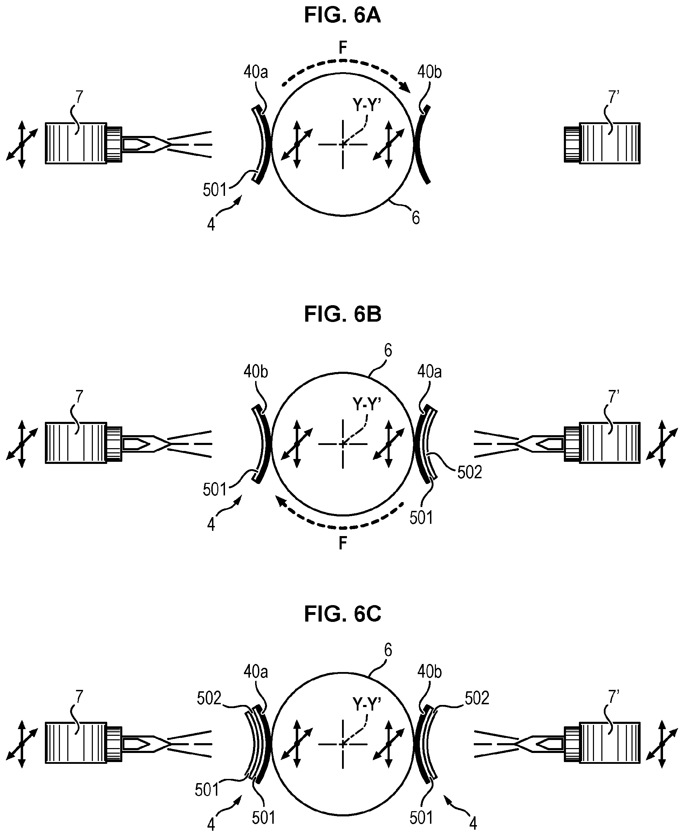

Les figures 6A à 6C illustrent une variante de réalisation du procédé selon laquelle deux substrats supports 40a, 40b sont fixés sur le carrousel 6, de préférence à 180° l'un de l'autre, ce qui permet d'augmenter la cadence de production.

Au départ, le substrat 40a est positionné devant la torche 7 et le substrat 40b devant la torche 7'. La sous-couche formée par la torche 7 (par exemple 501) est déposée sur le substrat 40a, tandis que la torche 7' n'est pas alimentée au départ, de sorte que le substrat 40b reste vierge.

A l'étape suivante représentée à la figure 6B, le carrousel 6 a tourné de 180°, de sorte que le substrat 40a recouvert d'une première sous-couche abradable 501 reçoit alors une première sous-couche anti-érosion 502, tandis que le substrat 40b reçoit une première sous-couche abradable 501, déposée directement sur le substrat 40b.

Les rotations de 180° sont poursuivies, de façon à amener alternativement les deux substrats 40a et 40b devant l'une ou l'autre des deux torches 7 et 7' et à obtenir ainsi le nombre souhaité de sous-couches 501 et 502.

Sur la figure 7, on peut voir une variante de réalisation dans laquelle six substrats supports 40a, 40b, 40c, 40d, 40e et 40f sont disposés sur le carrousel 6.

On peut ainsi disposer par exemple jusqu'à trente-deux substrats supports 40 (voire plus) sur un carrousel 6. De façon avantageuse, et afin d'augmenter les cadences de dépôt, plusieurs paires de torches 7 et 7' peuvent alors être disposées autour du carrousel 6.

Les paramètres de dépôt des deux torches 7 et 7' sont avantageusement réglés de façon que l'épaisseur de la sous-couche de matériau abradable 501 soit plus importante que celle de la sous-couche de matériau anti-érosion 502, comme exposé précédemment.

Pour cela, on peut jouer sur différents paramètres, tels que par exemple le débit de matière projetée, la vitesse de dépôt ou l'angle de projection.

Les débits de matière peuvent être différents. En agissant sur le ratio entre les débits des deux sous-couches 501 et 502 et sur le ratio entre leurs densités respectives, il est ainsi possible d'obtenir des épaisseurs différentes.

A titre d'exemple purement illustratif, si l'on dépose une sous-couche de matériau abradable 501 en AlSiBN à raison de 100g par minute et une sous-couche de matériau anti-érosion en AlNi à raison de 20g par minute (ratio de débit de cinq), sachant que la densité de l'AlSiBN est cinq fois plus faible que celle de l'AINi, alors on arrive à réaliser un dépôt de matériau anti-érosion dix fois plus mince que celui de la couche de matériau abradable.

La vitesse de dépôt détermine l'épaisseur de la couche déposée, lorsqu'on réalise le dépôt en une seul passe, (plus elle est lente et plus le dépôt est épais). Pour obtenir une couche plus épaisse, il est également possible d'agir sur les torches 7 ou 7' pour leur faire subir un mouvement de balayage et de va-et-vient, avant que le carrousel 6 ne soit entraîné en rotation pour l'étape suivante.

Enfin, on notera que l'épaisseur déposée varie selon le sinus de l'angle de projection. Plus l'angle de projection est fermé (rasant) par rapport à la surface revêtue et plus grande sera la zone recouverte. L'épaisseur déposée sera également moindre. Il est généralement préférable de ne pas dépasser un angle de 45° par rapport à la normale à la surface à recouvrir.

Grâce à ces caractéristiques de l'invention, il est ainsi possible de produire en continu, un grand nombre d'éléments d'étanchéité abradables 4 présentant un grand nombre de sous-couches ayant des caractéristiques différentes et d'obtenir ainsi un revêtement global 5 bénéficiant de tous les avantages de chacune des sous-couches 501, 502, sans les inconvénients (à savoir un caractère de matériau abradable avec une bonne résistance à l'érosion).

## Revendications

1. Procédé de fabrication en continu d'un élément d'étanchéité (4) abradable pour une turbomachine, cet élément d'étanchéité (4) comprenant un substrat support (40) recouvert d'un revêtement (5) comprenant au moins deux couches successives (50), chaque couche (50) comprenant une sous-couche de matériau abradable (501) et une sous-couche de matériau anti-érosion (502) et les différentes couches (50) étant disposées selon une direction d'empilement des couches, de façon qu'une sous-couche de matériau abradable (501) soit alternée avec une sous-couche de matériau anti-érosion (502), ce procédé étant **caractérisé en ce qu'**il comprend les étapes consistant à :
- a) disposer au moins un substrat support (40, 40a, 40b, 40c, 40d, 40e, 40f) sur un carrousel rotatif (6) autour duquel sont disposés au moins deux torches de projection thermique (7, 7'), l'une des deux torches (7, 7') permettant de déposer la sous-couche de matériau abradable (501) et l'autre des deux torches permettant de déposer la sous-couche de matériau anti-érosion (502),
- b) faire tourner le carrousel (6) de façon à amener ledit substrat support (40, 40a, 40b, 40c, 40d, 40e, 40f) successivement en face de l'une puis de l'autre des deux torches de projection thermique (7, 7') et à réaliser le dépôt de la sous-couche de matériau anti-érosion (502) et le dépôt de la sous-couche de matériau abradable (501) et répéter cette opération de rotation du carrousel (6) et de dépôt des sous-couches de façon à obtenir ledit élément d'étanchéité abradable (4).

2. Procédé de fabrication en continu selon la revendication 1, **caractérisé en ce que** lesdites torches de projection thermique (7, 7') sont des torches à plasma.

3. Procédé de fabrication en continu selon la revendication 1 ou 2, **caractérisé en ce qu'**il consiste à disposer N substrats support (40, 40a, 40b, 40c, 40d, 40e, 40f) sur le carrousel rotatif (6), espacés régulièrement d'un angle de 360°/N, sur la périphérie du carrousel.

4. Procédé de fabrication en continu selon l'une des revendications précédentes, **caractérisé en ce qu'**il consiste à déposer au moins trois couches empilées successives (50), sur ledit substrat support (40, 40a, 40b, 40c, 40d, 40e, 40f), de façon à former ledit revêtement (5) et **en ce que** les différentes sous-couches de matériau abradable (501) de ce revêtement (5) présentent une résistance mécanique à l'usure décroissante depuis la sous-couche de matériau abradable (501) la plus proche du substrat support (40, 40a, 40b, 40c, 40d, 40e, 40f), jusqu'à celle la plus éloignée de ce substrat support selon la direction d'empilement de ces couches (50).

5. Procédé de fabrication en continu selon l'une des revendications précédentes, **caractérisé en ce que** les différentes sous-couches de matériau anti-érosion (502) et les différentes sous-couches de matériau abradable (501) sont déposées de façon que les différentes sous-couches de matériau anti-érosion (502) présentent une même épaisseur et/ou que les différentes sous-couches de matériau abradable (501) présentent une même épaisseur.

6. Procédé de fabrication en continu selon l'une des revendications 1 à 4, **caractérisé en ce que** les différentes sous-couches de matériau anti-érosion (502) et les différentes sous-couches de matériau abradable (501) sont déposées de façon que pour chaque couche (50), la sous-couche de matériau abradable (501) est au moins dix fois plus épaisse que la sous-couche de matériau anti-érosion (502).

7. Procédé de fabrication en continu selon l'une des revendications précédentes, **caractérisé en ce que** chaque sous-couche anti-érosion (502) déposée comprend un matériau choisi parmi les matériaux à base de fer ou de nickel, tels que les alliages nickel/chrome/aluminium ou parmi les matériaux céramiques.

8. Procédé de fabrication en continu selon l'une des revendications précédentes, **caractérisé en ce que** le matériau constitutif de la sous-couche de matériau abradable (501) est choisi parmi les matériaux du groupe des terres rares.

9. Elément d'étanchéité (4) abradable pour une turbomachine, **caractérisé en ce qu'**il est obtenu par le procédé selon la revendication 4, **en ce qu'**il comprend un substrat support (40) recouvert d'un revêtement (5) comprenant au moins trois couches successives (50), **en ce que** chaque couche (50) comprend une sous-couche de matériau abradable (501) et une sous-couche de matériau anti-érosion (502), **en ce que** les différentes couches (50) sont disposées selon une direction d'empilement des couches de façon qu'une sous-couche de matériau abradable (501) soit alternée avec une sous-couche de matériau anti-érosion (502) et **en ce que** les différentes sous-couches de matériau abradable (501) présentent une résistance mécanique à l'usure décroissante depuis la sous-couche de matériau abradable la plus proche du substrat support jusqu'à celle la plus éloignée de ce substrat support selon la direction d'empilement des couches.

10. Elément d'étanchéité (4) selon la revendication 9, **caractérisé en ce que** les différentes couches empilées (50) sont en contact les unes sur les autres.

11. Elément d'étanchéité (4) selon la revendication 9 ou 10, **caractérisé en ce que** les différentes sous-couches de matériau anti-érosion (502) présentent une même épaisseur et/ou **en ce que** les différentes sous-couches de matériau abradables (501) présentent une même épaisseur.

12. Elément d'étanchéité (4) selon l'une des revendications 9 à 10, **caractérisé en ce que** pour chaque couche (50), la sous-couche de matériau abradable (501) est au moins dix fois plus épaisse que la sous-couche de matériau anti-érosion (502).

13. Elément d'étanchéité (4) selon l'une des revendications 9 à 12, **caractérisé en ce que** l'épaisseur de chaque sous-couche de matériau anti-érosion (502) est comprise entre 1 µm et 50 µm.

14. Elément d'étanchéité (4) selon l'une des revendications 9 à 13, **caractérisé en ce que** chaque sous-couche anti-érosion (502) comprend un matériau choisi parmi les matériaux à base de fer ou de nickel, tels que les alliages nickel/chrome/aluminium ou parmi les matériaux céramiques.

15. Elément d'étanchéité selon l'une des revendications 9 à 14, **caractérisé en ce que** le matériau de la sous-couche abradable (501) est choisi parmi les matériaux du groupe des terres rares.

## Patentansprüche

1. Verfahren zur kontinuierlichen Herstellung eines Anstreifdichtelements (4) für eine Turbomaschine, wobei dieses Dichtelement (4) ein Trägersubstrat (40) umfasst, das mit einer Beschichtung (5) überzogen ist, die mindestens zwei aufeinanderfolgende Schichten (50) umfasst, wobei jede Schicht (50) eine Unterschicht aus Anstreifmaterial (501) und eine Unterschicht aus Erosionsschutzmaterial (502) umfasst und die verschiedenen Schichten (50) gemäß einer Schichtstapelrichtung so angeordnet sind, dass sich eine Unterschicht aus Anstreifmaterial (501) mit einer Unterschicht aus Erosionsschutzmaterial (502) abwechselt, wobei dieses Verfahren **dadurch gekennzeichnet ist, dass** es die folgenden Schritte umfasst, die bestehen aus:
- a) Anordnen mindestens eines Trägersubstrats (40, 40a, 40b, 40c, 40d, 40e, 40f) auf einem rotierenden Karussell (6), um das herum mindestens zwei thermische Spritzbrenner (7, 7') angeordnet sind, wobei einer der beiden Brenner (7, 7') gestattet, die Unterschicht aus Anstreifmaterial (501) aufzubringen und der andere der beiden Brenner gestattet, die Unterschicht aus Erosionsschutzmaterial (502) aufzubringen,
- b) Drehen des Karussells (6) so, dass das Trägersubstrat (40, 40a, 40b, 40c, 40d, 40e, 40f) schrittweise erst vor den einen und dann vor den anderen der beiden thermischen Spritzbrenner (7, 7') geführt wird und die Aufbringung der Unterschicht aus Erosionsschutzmaterial (502) sowie die Aufbringung der Unterschicht aus Anstreifmaterial (501) durchgeführt wird und dieser Vorgang des Drehens des Karussells (6) und des Aufbringens der Unterschichten so wiederholt wird, dass das Anstreifdichtelement (4) erhalten wird.

2. Verfahren zur kontinuierlichen Herstellung nach Anspruch 1, **dadurch gekennzeichnet, dass** die thermischen Spritzbrenner (7, 7') Plasmabrenner sind.

3. Verfahren zur kontinuierlichen Herstellung nach Anspruch 1 oder 2, **dadurch gekennzeichnet, dass** es darin besteht, N Trägersubstrate (40, 40a, 40b, 40c, 40d, 40e, 40f) auf dem drehenden Karussell (6) anzuordnen, die in einem Winkel von 360°/N auf dem Umfang des Karussells gleichmäßig beabstandet angeordnet sind.

4. Verfahren zur kontinuierlichen Herstellung nach einem der vorstehenden Ansprüche, **dadurch gekennzeichnet, dass** es darin besteht, mindestens drei aufeinanderfolgende Stapelschichten (50) auf das Trägersubstrat (40, 40a, 40b, 40c, 40d, 40e, 40f) aufzubringen, um die Beschichtung (5) zu bilden, und dass die verschiedenen Unterschichten aus Anstreifmaterial (501) dieser Beschichtung (5) eine mechanische Verschleißfestigkeit aufweisen, die von der dem Trägersubstrat (40, 40a, 40b, 40c, 40d, 40e, 40f) am nächsten gelegenen Unterschicht aus Anstreifmaterial (501) bis hin zu derjenigen, die in Stapelrichtung dieser Schichten (50) am weitesten von diesem Trägersubstrat entfernt ist, abnimmt.

5. Verfahren zur kontinuierlichen Herstellung nach einem der vorstehenden Ansprüche, **dadurch gekennzeichnet, dass** die verschiedenen Schichten aus Erosionsschutzmaterial (502) und die verschiedenen Unterschichten aus Anstreifmaterial (501) so aufgebracht werden, dass verschiedenen Unterschichten aus Erosionsschutzmaterial (502) dieselbe Dicke aufweisen und/oder dass die verschiedenen Unterschichten aus Anstreifmaterial (501) dieselbe Dicke aufweisen.

6. Verfahren zur kontinuierlichen Herstellung nach einem der Ansprüche 1 bis 4, **dadurch gekennzeichnet, dass** die verschiedenen Schichten aus Erosionsschutzmaterial (502) und die verschiedenen Unterschichten aus Anstreifmaterial (501) so aufgebracht werden, dass für jede Schicht (50) die Unterschicht aus Anstreifmaterial (501) mindestens zehnmal dicker als die Unterschicht aus Erosionsschutzmaterial (502) ist.

7. Verfahren zur kontinuierlichen Herstellung nach einem der vorstehenden Ansprüche, **dadurch gekennzeichnet, dass** jede aufgebrachte Erosionsschutzunterschicht (502) ein Material umfasst, das aus den Materialien auf Eisen- oder Nickelbasis, wie beispielsweise Nickel-Chrom-Aluminium-Legierungen, oder aus keramischen Materialien ausgewählt ist.

8. Verfahren zur kontinuierlichen Herstellung nach einem der vorstehenden Ansprüche, **dadurch gekennzeichnet, dass** das Material, das die Anstreifunterschicht (501) bildet, aus den Materialien der Gruppe der Seltenen Erden ausgewählt ist.

9. Anstreifdichtelement (4) für eine Turbomaschine, **dadurch gekennzeichnet, dass** es nach dem Verfahren nach Anspruch 4 hergestellt wird, dass es ein Trägersubstrat (40) umfasst, das mit einer Beschichtung (5) überzogen ist, die mindestens drei aufeinanderfolgende Schichten (50) umfasst, dass jede Schicht (50) eine Unterschicht aus Anstreifmaterial (501) und eine Unterschicht aus Erosionsschutzmaterial (502) umfasst, dass die verschiedenen Schichten (50) in einer Schichtstapelrichtung so angeordnet sind, dass sich eine Unterschicht aus Anstreifmaterial (501) mit einer Unterschicht aus Erosionsschutzmaterial (502) abwechselt und dass die verschiedenen Unterschichten aus Anstreifmaterial (501) eine mechanische Verschleißfestigkeit aufweisen, die von der dem Trägersubstrat am nächsten liegenden Unterschicht aus Anstreifmaterial bis zu der in Stapelrichtung der Schichten am weitesten von diesem Trägersubstrat entfernten Unterschicht abnimmt.

10. Dichtelement (4) nach Anspruch 9, **dadurch gekennzeichnet, dass** die verschiedenen Stapelschichten (50) miteinander in Kontakt stehen.

11. Dichtelement (4) nach Anspruch 9 oder 10, **dadurch gekennzeichnet, dass** die verschiedenen Unterschichten aus Erosionsschutzmaterial (502) dieselbe Dicke aufweisen und/oder dass die verschiedenen Unterschichten aus Anstreifmaterial (501) dieselbe Dicke aufweisen.

12. Dichtelement (4) nach einem der Ansprüche 9 bis 10, **dadurch gekennzeichnet, dass** bei jeder Schicht (50) die Unterschicht aus Anstreifmaterial (501) mindestens zehnmal dicker als die Unterschicht aus Erosionsschutzmaterial (502) ist.

13. Dichtelement (4) nach einem der Ansprüche 9 bis 12, **dadurch gekennzeichnet, dass** die Dicke jeder Unterschicht aus Erosionsschutzmaterial (502) zwischen 1 µm und 50 µm liegt.

14. Dichtelement (4) nach einem der Ansprüche 9 bis 13, **dadurch gekennzeichnet, dass** jede Erosionsschutzunterschicht (502) ein Material umfasst, das aus den Materialien auf Eisen- oder Nickelbasis, wie beispielsweise Nickel-Chrom-Aluminium-Legierungen, oder aus keramischen Materialien ausgewählt ist.

15. Dichtelement nach einem der Ansprüche 9 bis 14, **dadurch gekennzeichnet, dass** das Material der Anstreifunterschicht (501) aus den Materialien der Gruppe der Seltenen Erden ausgewählt ist.

## Claims

1. A method for the continuous manufacture of an abradable sealing element (4) for a turbomachine, said sealing element (4) comprising a support substrate (40) coated with a coating (5) comprising at least two successive layers (50), each layer (50) comprising a sublayer of abradable material (501) and a sublayer of anti-erosion material (502), and the various layers (50) being arranged in a layer stacking direction such that a sublayer of abradable material (501) alternates with a sublayer of erosion-resistant material (502), said method being **characterized in that** it comprises the steps of:
- a) positioning at least one support substrate (40, 40a, 40b, 40c, 40d, 40e, 40f) on a rotating carousel (6) around which at least two thermal spraying torches (7, 7') are arranged, one of the two torches (7, 7') being used to deposit the underlayer of abradable material (501) and the other of the two torches being used to deposit the underlayer of erosion-resistant material (502),
- b) rotating the carousel (6) so as to bring said support substrate (40, 40a, 40b, 40c, 40d, 40e, 40f) successively in front of first one and then the other of the two thermal spray torches (7, 7') and to deposit the anti-erosion material sublayer (502) and the abradable material sublayer (501), and repeating this operation of rotating the carousel (6) and depositing the sublayers so as to obtain said abradable sealing element (4).

2. A continuous manufacturing process according to claim 1, **characterized in that** said thermal spray torches (7, 7') are plasma torches.

3. A continuous manufacturing method according to claim 1 or 2, **characterized in that** it consists of arranging N support substrates (40, 40a, 40b, 40c, 40d, 40e, 40f) on the rotating carousel (6), spaced evenly at an angle of 360°/N around the periphery of the carousel.

4. A continuous manufacturing process according to one of the preceding claims, **characterized in that** it consists of depositing at least three successive stacked layers (50) on said support substrate (40, 40a, 40b, 40c, 40d, 40e, 40f) in such a way as to form said coating (5), and **in that** the various sublayers of abradable material (501) of this coating (5) exhibit a mechanical wear resistance that decreases from the sublayer of abradable material (501) closest to the support substrate (40, 40a, 40b, 40c, 40d, 40e, 40f) to the one furthest from said support substrate in the direction of stacking of these layers (50).

5. A continuous manufacturing process according to one of the preceding claims, **characterized in that** the various sublayers of erosion-resistant material (502) and the various sublayers of abradable material (501) are deposited such that the various sublayers of erosion-resistant material (502) have the same thickness and/or the various sublayers of abradable material (501) have the same thickness.

6. A continuous manufacturing process according to any one of claims 1 through 4, **characterized in that** the various sublayers of anti-erosion material (502) and the various sublayers of abradable material (501) are deposited such that, for each layer (50), the sublayer of abradable material (501) is at least ten times thicker than the sublayer of erosion-resistant material (502).

7. A continuous manufacturing process according to one of the preceding claims, **characterized in that** each deposited anti-erosion sublayer (502) comprises a material selected from iron- or nickel-based materials, such as nickel/chromium/aluminum alloys, or from ceramic materials.

8. A continuous manufacturing process according to one of the preceding claims, **characterized in that** the material constituting the abradable material sublayer (501) is selected from rare earth materials.

9. An abradable sealing element (4) for a turbomachine, **characterized in that** it is produced by the method according to claim 4, **in that** it comprises a support substrate (40) coated with a coating (5) comprising at least three successive layers (50), **in that** each layer (50) comprises a sublayer of abradable material (501) and a sublayer of erosion-resistant material (502), **in that** the various layers (50) are arranged in a stacking direction such that a sublayer of abradable material (501) alternates with a sub sublayer of erosion-resistant material (502), and **in that** the various sublayers of abradable material (501) exhibit a mechanical wear resistance that decreases from the sublayer of abradable material closest to the support substrate to the one farthest from said support substrate in the direction of layer stacking.

10. Sealing element (4) according to claim 9, **characterized in that** the various stacked layers (50) are in contact with one another.

11. A sealing element (4) according to claim 9 or 10, **characterized in that** the various sublayers of erosion-resistant material (502) have the same thickness and/or **in that** the various sublayers of abradable material (501) have the same thickness.

12. A sealing element (4) according to one of claims 9 through 10, **characterized in that**, for each layer (50), the sublayer of abradable material (501) is at least ten times thicker than the sublayer of erosion-resistant material (502).

13. A sealing element (4) according to any one of claims 9 through 12, **characterized in that** the thickness of each erosion-resistant material sublayer (502) is between 1 µm and 50 µm.

14. A sealing element (4) according to any one of claims 9 through 13, **characterized in that** each anti-erosion sublayer (502) comprises a material selected from iron- or nickel-based materials, such as nickel/chromium/aluminum alloys, or from ceramic materials.

15. A sealing element according to any one of claims 9 through 14, **characterized in that** the material of the abradable sublayer (501) is selected from rare earth materials.
